# EUROPEAN PATENT APPLICATION

(11) **EP 3 805 964 A1**
(43) Date of publication of application: **14.04.2021**
(21) Application number: 20196514.2
(22) Date of filing: 16.09.2020
(51) Int. Cl.: G06F 21/44

(54) **INFORMATION PROCESSING APPARATUS, INFORMATION PROCESSING SYSTEM, METHOD, AND CARRIER MEANS**

(30) Priority: 07.10.2019 JP 2019184607
(71) Applicant: Ricoh Company, Ltd., Tokyo 143-8555 (JP)
(72) Inventor: Katoh, Yuuya, Tokyo 143-8555 (JP)
(74) Representative: White, Duncan Rohan

(57) **Abstract**

An information processing apparatus, an information processing system, a method, and a carrier means. The information processing apparatus (20) receives a usage start request from an information terminal (30), prepares communication by a second communication method having a wider communication range than a first communication method, based on communication by the first communication method with the information terminal (30) related to the usage start, establishes communication by the second communication method with the information terminal (30), and completes a usage termination process based on the communication by the second communication method with the information terminal (30) in response to a trigger of usage termination.

## Description

### Technical Field

The present disclosure relates to an information processing apparatus, an information processing system, a method, and a carrier means.

### Background Art

Conventionally, a technique for using a mobile information terminal such as a smart phone having a near field communication function such as Near Field Communication (NFC) to log in (usage start) to and log out (usage termination) from a system such as a multifunction peripheral (MFP) is known.

Japanese Patent No. 2018-045666 (Patent Document 1) discloses above-described login and logout processes. Patent Document 1 describes a configuration in which an acceleration sensor of a wearable terminal attached to a user's arm detects an acceleration corresponding to a moving of the wearable terminal, and acceleration information together with information for user authentication is transmitted by the Bluetooth (registered trademark) module to the MFP. The MFP performs user authentication process based on the received user authentication information when detecting a specific login gesture from the received acceleration information and performs login process when the user is a legitimate user. Further, when the MFP detects a specific gesture for logout from the received acceleration information and does not receive the acceleration information for a certain period of time, the MFP cancels the user authentication process and performs the logout process.

However, Patent Document 1 cancels the user authentication process and performs the logout process when the acceleration information is not received for a certain period of time. Therefore, the communication with the MFP is already cut off during the logout process, and the logout may not be properly completed.

### SUMMARY

Embodiments of the present disclosure describe an information processing apparatus, an information processing system, a method, and a carrier means. The information processing apparatus receives a usage start request from an information terminal, prepares communication by a second communication method having a wider communication range than a first communication method, based on communication by the first communication method with the information terminal related to the usage start, establishes communication by the second communication method with the information terminal, and completes a usage termination process based on the communication by the second communication method with the information terminal in response to a trigger of usage termination.

According to the embodiments of the present disclosure, the usage termination process can be safely completed without impairing the convenience of the user.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a diagram illustrating a network environment of an image processing system according to embodiments of the present disclosure;
FIG. 2 is a diagram illustrating a hardware configuration of a computer that can be used as a mobile information terminal and an authentication server in the image processing system according to embodiments of the present disclosure;
FIG. 3 is a diagram illustrating a hardware configuration of an image processing apparatus in the image processing system according to embodiments of the present disclosure;
FIG. 4 is a block diagram illustrating a functional configuration of the image processing apparatus in the image processing system according to embodiments of the present disclosure;
FIG. 5 is a block diagram illustrating a functional configuration of the mobile information terminal in the image processing system according to embodiments of the present disclosure;
FIG. 6A and FIG. 6B are sequence diagrams illustrating a login process executed by the image processing system according to embodiments of the present disclosure;
FIG. 7 is a sequence diagram illustrating a logout process executed by the image processing system according to embodiments of the present disclosure;
FIG. 8 is a flowchart illustrating login process executed by the image processing apparatus according to embodiments of the present disclosure; and
FIG. 9 is a flowchart illustrating login process executed by the image processing apparatus according to another embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result. As used herein, the singular forms "a", "an", and "the" are intended to include the plural forms as well, unless the context clearly indicates otherwise.

Hereinafter, embodiments of the present disclosure are described, but the embodiments of the present disclosure are not limited to the following embodiments. In the following description of the embodiments, as an example of the information processing apparatus and the information processing system including the information processing apparatus and the information terminal, an image processing apparatus 20, an image processing system 10 including the image processing apparatus 20 and a mobile information terminal 30 are used.

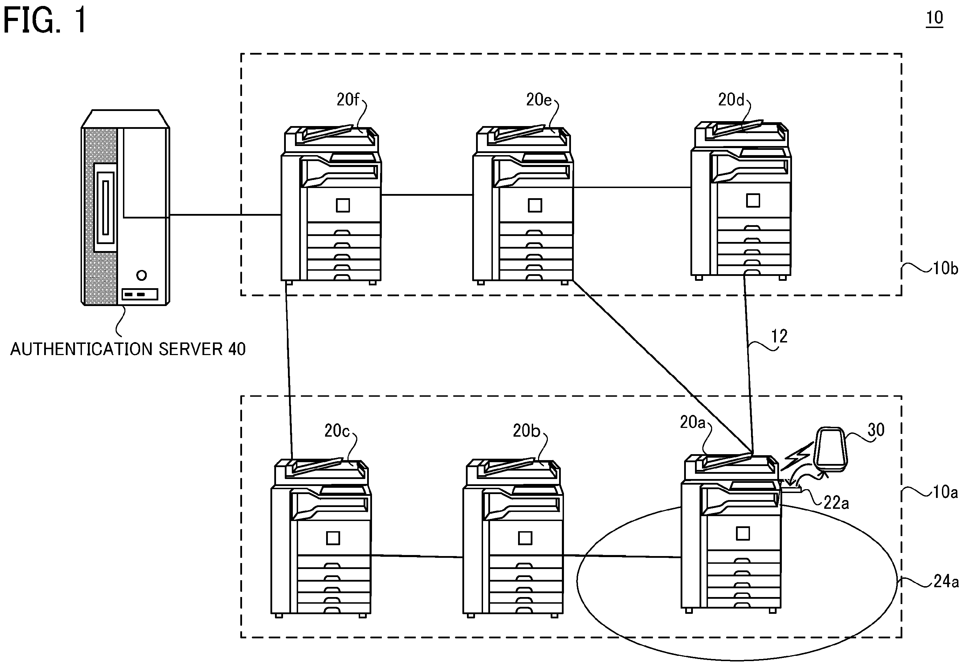

FIG. 1 is a diagram illustrating a network environment of an image processing system 10 according to embodiments of the present disclosure. The image processing system 10 illustrated in FIG. 1 includes an image processing apparatus 20 and a mobile information terminal 30. Although a plurality of image processing apparatuses 20a to 20f are illustrated in FIG. 1, the number of image processing apparatuses 20 is not limited, and the network environment may include one image processing apparatus 20. Further, although one mobile information terminal 30 is illustrated in FIG. 1, the number of mobile information terminals 30 is not limited, and a plurality of mobile information terminals 30 may be included in the network environment.

In the network environment illustrated in FIG. 1, each of the plurality of image processing apparatuses 20a to 20f operates as a relay device to form a mesh network 12 in an equal relationship with each other. Each of the plurality of image processing apparatuses 20a to 20f is configured to communicate with another image processing apparatus 20 either directly or through one or more relay devices. The mesh network 12 is not particularly limited but may be Zigbee (registered trademark) or the like.

Note that in the present embodiment, preferably the mesh network is implemented, but the present disclosure is not limited to the implementation of the mesh network. In another embodiment, a local area network (LAN) according to a transaction protocol such as Ethernet (registered trademark) or Transmission Control Protocol/Internet Protocol (TCP/IP), Local 5G, wide area network (WAN) connected using virtual private network (VPN) or leased line, and the internet may be included.

The image processing apparatus 20 and the mobile information terminal 30 are connected to each other by near field communication such as Near Field Communication (NFC), short-range communication such as Bluetooth (registered trademark), wireless LAN, Wi-Fi (registered trademark) and the like. In a specific embodiment, the image processing apparatus 20 and the mobile information terminal 30 may be connected in a form of directly communicating with each other. In the specific embodiment, for example, the image processing apparatus 20 and the mobile information terminal 30 may be connected in an ad-hoc mode of the wireless LAN. Alternatively, in another embodiment, the image processing apparatus 20 may be connected to the mobile information terminal 30 as an access point in a wireless LAN infrastructure mode.

In the present embodiment, the image processing apparatus 20 may be a multifunction peripheral including a copy function, a scanner function, a facsimile function, and the like. The image processing apparatus 20 accepts login (usage start) and logout (usage termination) using the mobile information terminal 30 and operates as the information processing apparatus in the present embodiment.

In a particular embodiment, the image processing apparatus 20 includes a mounting table 22 (illustrated for the image processing apparatus 20a) for mounting the mobile information terminal 30. The mounting table 22 is provided with a communication part capable of communicating using near field communication such as NFC. By placing the mobile information terminal 30 on the mounting table 22, the user shows intention to log in to the image processing apparatus 20. In such case, the mobile information terminal 30 transmits information based on user intention to log in to the image processing apparatus 20. In addition, the user shows intention to log out from the image processing apparatus 20 by removing the mobile information terminal 30 from the mounting table 22. In such case, the mobile terminal 30 transmits information based on user intention to log out to the image processing apparatus 20. Alternatively, in another embodiment, when short-range wireless communication such as Bluetooth is used, the mobile information terminal 30 transmits information based on user intention to log in to the image processing apparatus 20 in response to the user entering a given range 24 centered on the image processing apparatus 20 while carrying the mobile information terminal 30. The mobile information terminal 30 transmits information to the image processing apparatus 20 based on user intension to log out in response to the user leaving the given range 24 of the image processing apparatus 20.

The mobile information terminal 30 is a terminal device carried by the user to use the functions of the image processing apparatus 20. The mobile information terminal 30 is provided with the functions of near field communication such as NFC described above, short-range communication such as Bluetooth, and wireless communication such as a wireless LAN. In addition, an application for logging in and out of the image processing apparatus 20 described above is installed in the mobile information terminal 30 and operates as the information terminal in the present embodiment.

As illustrated in FIG. 1, the image processing system 10 may further include an authentication server 40. The authentication server 40 is a directory server or the like and authenticates the user of one or more image processing apparatuses 20 and manages the authority to use each function of the image processing apparatus 20 for each legitimate user. The authentication server 40 is connected to one of the image processing apparatuses 20 (20f in FIG. 1) and participates in the mesh network 12. The authentication server 40 receives an inquiry from the image processing apparatus 20 that requested a login of a user using the mobile information terminal 30, verifies the legitimacy of the user based on the authentication information acquired from the mobile information terminal 30 of the user, and returns the authentication result and the authority information given to the user as necessary to the image processing apparatus 20.

Note that the embodiment illustrated in FIG. 1 is described as being provided with a separate authentication server 40 that holds user information and includes an authentication function exclusively. However, the present disclosure is not limited to the provision of the separate authentication server 40, and one or more image processing apparatuses 20 may also function as the authentication server 40, or the image processing apparatuses 20 may respectively include the authentication server 40.

In the image processing system 10 described above, the operation of logging in using the mobile information terminal 30 is performed by placing the mobile information terminal 30 on the mounting table 22 included in the image processing apparatus 20 or approaching the image processing apparatus 20 and entering the given range 24. These operations are natural operations for a user who wants to use the specific image processing apparatus 20, and also causes a change to a situation in which the signal strength becomes strong. Therefore, the login process using the mobile information terminal 30 is considered convenient. On the other hand, the operation of logging out using the mobile information terminal 30 is an operation of removing the mobile information terminal 30 from the mounting table 22 or leave the image processing apparatus 20 and getting out of the given range 24. These operations are natural operations for the user who has finished using the specific image processing apparatus 20. However, these operations bring about a change in the direction in which the signal strength becomes weaker. Therefore, when the intention to log out is determined, the communication between the image processing apparatus 20 and the mobile information terminal 30 may be already disconnected, and logout operation may not be appropriately completed. In other words, there is room for improvement in convenience and safety when logging out.

For example, the image processing apparatus 20 may fail in processing that should be performed during logout, or logout may be locked and failed due to another function of the image processing apparatus 20. In such a case, it is desirable to notify the user who has left the image processing apparatus 20 of the failure and to complete the logout correctly. Further, there is also a demand for performing communication between the image processing apparatus 20 and the mobile information terminal 30 to exchange data during the logout process. The user can also explicitly transmit the logout intention by pressing the button for explicitly logging out. However, the act of pressing the button to log out is not a natural action for the user who has finished his work. Further, even if the user explicitly transmits the logout intention, if there is a problem with the logout process after that, the user often leaves without noticing. Therefore, a technique that enables the safe completion of the logout process without impairing the convenience of the user is desired.

In the image processing system 10 according to the present embodiment, the image processing apparatus 20 receives a request for login using the mobile information terminal 30 based on communication by a first communication method with the mobile information terminal 30 for login, and prepares for communication by a second communication method which has a wider communication range than the first communication method. The image processing apparatus 20 further establishes the communication by the second communication method with the mobile information terminal 30 and, in response to a logout trigger, completes the logout process based on the communication by the second communication method with the mobile information terminal 30. As a result, even if the communication by the first communication method is already disconnected at the time of logout or during the logout process, the communication by the second communication method takes over the communication with the mobile information terminal 30 and the logout process is completed. Therefore, the logout process is safely completed without impairing the convenience of the user.

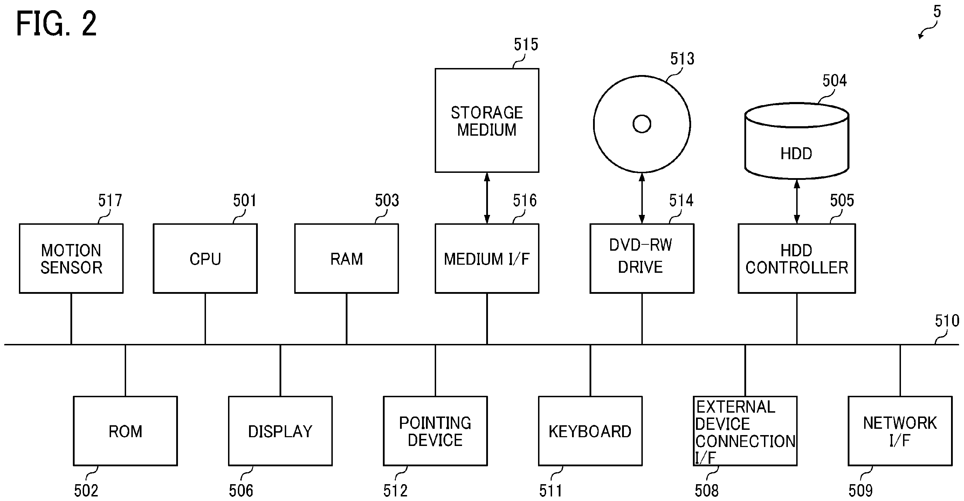

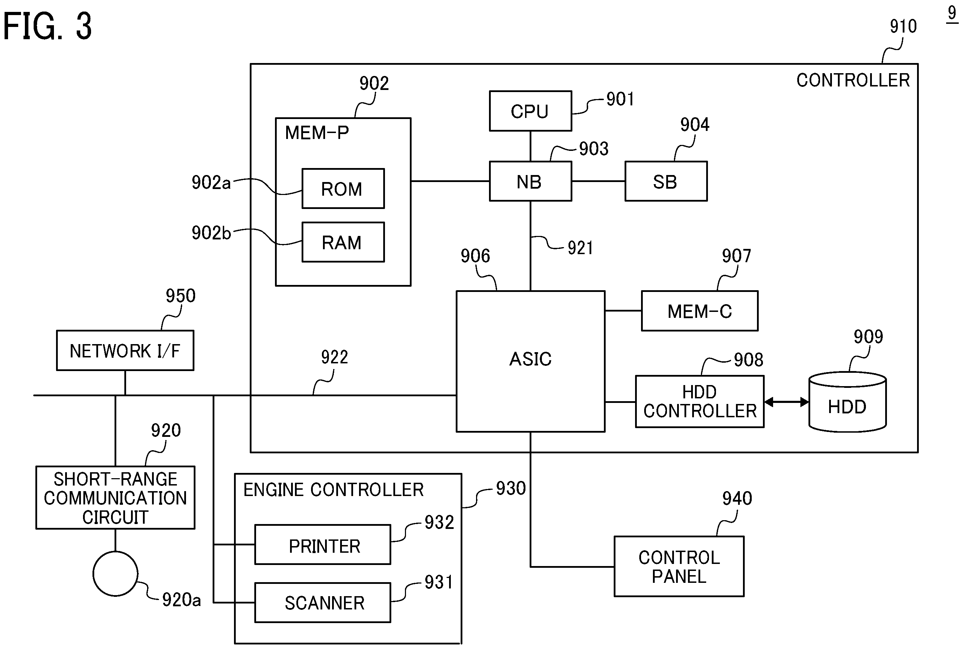

The login function and the logout function in the image processing system 10 according to the present embodiment is described. A hardware configuration of main devices in the present embodiment is described with reference to FIGs. 2 and 3.

FIG. 2 is a diagram illustrating a hardware configuration of a computer system that can be used as the mobile information terminal 30 and the authentication server 40 according to the present embodiment. Here, the hardware configuration of the computer system 5 is described.

As illustrated in FIG. 2, the computer system 5 is a general-purpose computer and includes a central processing unit (CPU) 501, a read only memory (ROM) 502, a random access memory (RAM) 503, a hard disk drive (HDD) 504, an HDD controller 505, a display 506, an external device connection interface (I/F) 508, a network I/F 509, a bus line 510, a keyboard 511, a pointing device 512, a digital versatile disk rewritable (DVD-RW) drive 514, a medium I /F 516, and a motion sensor 517.

Among these elements, the CPU 501 controls entire operation of the computer system 5. The ROM 502 stores programs such as an initial program loader (IPL) to boot the CPU 501. The RAM 503 is used as a work area for the CPU 501. The HDD 504 stores various data such as programs. The HDD controller 505 controls reading or writing of various data with respect to the HDD 504 under the control of the CPU 501. The display 506 displays various information such as a cursor, menu, window, character, or image. The external device connection I/F 508 is an interface for connecting various external devices. The external device in this case is, for example, a universal serial bus (USB) memory or a printer. The network I/F 509 is an interface for performing data communication using the network 12. The bus line 510 is, for example, an address bus or a data bus, which electrically connects the components such as the CPU 501 illustrated in FIG. 2.

The keyboard 511 is an example of an input device provided with a plurality of keys for allowing a user to input characters, numerals, or various instructions. The pointing device 512 is an example of an input device that allows a user to select or execute a specific instruction, select a target for processing, or move a cursor being displayed. The DVD-RW drive 514 reads and writes various data from and to a DVD-RW 513, which is an example of a removable storage medium. The removable storage medium is not limited to the DVD-RW and may be a digital versatile disc-recordable (DVD-R) or the like. The medium I/F 516 controls reading or writing (storing) of data with respect to a storage medium 515 such as a flash memory. The motion sensor 517 includes at least one of a triaxial acceleration sensor, a triaxial angular velocity sensor, and a geomagnetic sensor, and acquires acceleration data, angular velocity data, geomagnetic data, and the like.

Note that the embodiment illustrated in FIG. 1 is an example and is described as including specific components such as the DVD-RW drive 514 and the keyboard 511. Alternatively, in other embodiments such as smartphones, tablet computers, smart watches, smart glasses, etc., some hardware components illustrated in FIG. 1 may be omitted, or hardware not illustrated in FIG. 1 may be provided.

FIG. 3 is a hardware configuration of the image processing apparatus 20 which is, for example, a multifunction peripheral (MFP) 9. As illustrated in FIG. 3, the MFP 9 includes a controller 910, a short-range communication circuit 920, an engine controller 930, a control panel 940, and a network I/F 950.

The controller 910 includes a CPU 901 as a main processor, a system memory (MEM-P) 902, a north bridge (NB) 903, a south bridge (SB) 904, an Application Specific Integrated Circuit (ASIC) 906, a local memory (MEM-C) 907 as a storage unit, an HDD controller 908, and an HDD 909. The NB 903 and the ASIC 906 are connected through an Accelerated Graphics Port (AGP) bus 921.

The CPU 901 is a processor that performs overall control of the MFP 9. The NB 903 connects the CPU 901 with the MEM-P 902, SB 904, and AGP bus 921. The NB 903 includes a memory controller for controlling reading or writing of various data with respect to the MEM-P 902, a Peripheral Component Interconnect (PCI) master, and an AGP target.

The MEM-P 902 includes a ROM 902a as a memory that stores program and data for implementing various functions of the controller 910. The MEM-P 902 further includes a RAM 902b as a memory that deploys the program and data, or as a drawing memory that stores drawing data for printing. The program stored in the ROM 902a may be stored in any computer-readable storage medium, such as a compact disc-read only memory (CD-ROM), compact disc-recordable (CD-R), or digital versatile disc (DVD), in a file format installable or executable by the computer, for distribution.

The SB 904 connects the NB 903 with a peripheral component interconnect (PCI) device or a peripheral device. The ASIC 906 is an integrated circuit (IC) dedicated to an image processing use, and connects the AGP bus 921, a PCI bus 922, the HDD controller 908, and the MEM-C 907. The ASIC 906 includes a PCI target, an AGP master, an arbiter (ARB) as a central processor of the ASIC 906, a memory controller for controlling the MEM-C 907, a plurality of direct memory access controllers (DMACs) capable of converting coordinates of image data with a hardware logic, and a PCI unit that transfers data between a scanner 931 and a printer 932 through the PCI bus 922. The ASIC 906 may be connected to a USB interface, or the Institute of Electrical and Electronics Engineers 1394 (IEEE1394) interface.

The MEM-C 907 is a local memory used as a copy image buffer and a code buffer. The HDD 909 is a storage for storing image data, font data used during printing, and forms. The HDD controller 908 controls reading and writing of various data from and to the HDD 909 under control of the CPU 901. The AGP bus 921 is a bus interface for a graphics accelerator card, which has been proposed to accelerate graphics processing. Through directly accessing the MEM-P 902 by high-throughput, speed of the graphics accelerator card is improved.

Further, the short-range communication circuit 920 includes an antenna for short-range communication circuit 920a. The short-range communication circuit 920 is a communication circuit such as NFC, Bluetooth (registered trademark), and wireless LAN.

The engine controller 930 includes a scanner 931 and a printer 932. The control panel 940 displays the current setting value, selection screen, etc., and includes the operation unit that includes a touch panel that receives an input from an operator, a ten key that receives a set value of a condition related to image formation such as a density setting condition, and a start key that receives a copy start instruction. The controller 910 controls all operations of the MFP 9. For example, the controller 910 controls drawing, communication, or user inputs to the control panel 940. The scanner 931 or the printer 932 includes an image processing unit such as error diffusion processing and gamma conversion processing.

In response to an instruction to select a specific application through the control panel 940, for example, using a mode switch key, the MFP 9 selectively performs a document box function, a copy function, a print function, and a facsimile function. The document box mode is selected when the document box function is selected, the copy mode is selected when the copy function is selected, the printer mode is selected when the printer function is selected, and the facsimile mode is selected when the facsimile mode is selected.

The network I/F 950 is an interface for performing data communication using the network 12. The short-range communication circuit 920 and the network I/F 950 are electrically connected to the ASIC 906 through the PCI bus 922.

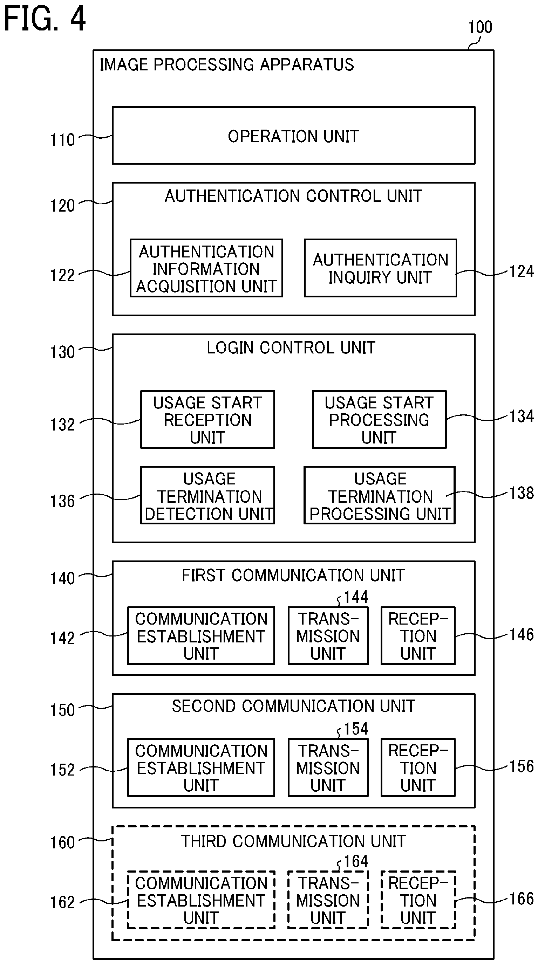

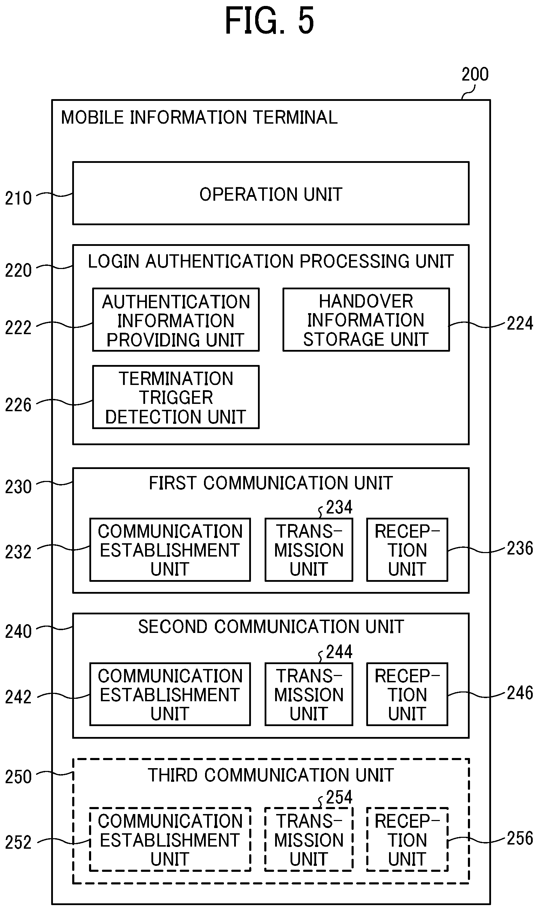

Hereinafter, with reference to FIG. 4 and FIG. 5, the image processing system 10 according to the present embodiment capable of logging in and out of the image processing apparatus 20 using the mobile information terminal 30 is described in detail.

FIG. 4 is a block diagram illustrating a functional configuration of the image processing apparatus 20 in the image processing system 10 according to the present embodiment. FIG. 5 is a block diagram illustrating a functional configuration of the mobile information terminal 30 in the image processing system 10 according to the present embodiment.

First, the functional configuration of the image processing apparatus 20 is described with reference to FIG. 4. The functional block 100 of the image processing apparatus 20 includes a plurality of elements, accepts login and logout using the mobile information terminal 30 carried by the user, and provides the user with various functions of the image processing apparatus 20 within the scope of granted authority. As illustrated in FIG. 4, the functional block 100 of the image processing apparatus 20 includes an operation unit 110, an authentication control unit 120, a login control unit 130, a first communication unit 140, and a second communication unit 150. Hereinafter, the main configuration related to the login and logout processes in the functional block 100 of the image processing apparatus 20 is described in more detail.

The operation unit 110 includes the control panel 940 illustrated in FIG. 3 and receives various instructions from the user. Various instructions from the user include, but are not limited to, setting instructions and execution instructions for using various functions such as the copy function, the scan function, and the facsimile function. Further, although description is given mainly on login and logout using the mobile information terminal 30, the operation unit 110 may display a login screen and a logout button to accept direct login and logout intentions from the user.

The authentication control unit 120 controls authentication of a user who logs in to the image processing apparatus 20. The login control unit 130 controls the login process to the image processing apparatus 20 and the logout process from the image processing apparatus 20.

The first communication unit 140 controls the communication by the first communication method. The first communication method is, in a specific embodiment, a near field communication standard that establishes communication based on alignment of communication parts, specifically, NFC. In another particular embodiment, the first communication method is a short-range wireless communication standard, specifically, Bluetooth (registered trademark).

The first communication unit 140 includes a communication establishment unit 142, a transmission unit 144, and a reception unit 146. The communication establishment unit 142 establishes communication by the first communication method with communication partner (mobile information terminal 30). When the first communication method is NFC, communication is established without prior information sharing by aligning communication parts. When the first communication method is Bluetooth, information sharing (pairing) is to be performed in advance with the communication partner as necessary. The transmission unit 144 transmits data to the other device through the communication by the first communication method established by the communication establishment unit 142. The reception unit 146 receives data from the communication partner through the communication of the established first communication method.

The second communication unit 150 controls the communication by the second communication method. Here, the second communication method has a wider communication range than the first communication method. NFC has a communication range of several centimeters to about 10 centimeters. Bluetooth has a communication range of about 10 meters in the case of Class 2 which is actually used in many products. In the present embodiment, Bluetooth Class 2 is assumed to be used. The wireless LAN may have a communication range of 50 to 100 meters or more in a straight line distance, depending on standard, output, and communication environment. Therefore, when the communication distances are arranged in ascending order, the near field communication (NFC), the short-range communication (Bluetooth), and the wireless communication (wireless LAN) are listed in this order.

When the first communication method is NFC, the second communication method may be Bluetooth or wireless LAN. The wireless LAN is preferable from the viewpoint of transmission data capacity. When the first communication method is Bluetooth, the second communication method can be the wireless LAN. Note that when there are a plurality of communication distances within the same standard, the first communication method and the second communication method may be the same standard. For example, the first communication method and the second communication method may be Class 2 and Class 1 of Bluetooth, respectively.

The second communication unit 150 includes a communication establishment unit 152, a transmission unit 154, and a reception unit 156. The communication establishment unit 152 establishes communication with the communication partner (mobile information terminal 30) by the second communication method. As described below in detail, information for establishing the communication by the second communication method (such as service set identifier (SSID) and password, hereinafter referred to as advance preparation information) is shared by using the first communication unit 140 described above. The transmission unit 154 transmits data to the communication partner through the communication by the second communication method established by the communication establishment unit 152. The reception unit 156 receives data from the communication partner through the communication by the second communication method.

The authentication control unit 120 includes an authentication information acquisition unit 122 and an authentication inquiry unit 124.

The authentication information acquisition unit 122 acquires user authentication information such as an identifier (ID) and a password from the mobile information terminal 30 using the first communication unit 140, for example. In a specific embodiment, the user authentication information is acquired at the start of login. In another embodiment, the user authentication information may be acquired in advance before the actual login request is accepted. The authentication information acquisition unit 122 is the acquisition unit in this embodiment.

The authentication inquiry unit 124 inquires of its own database based on the acquired user authentication information when the authentication inquiry unit holds the database of the authentication information of one or more users. When the authentication inquiry unit 124 confirms the legitimacy of the user as a result of the inquiry, the authentication inquiry unit 124 acquires the authority given to the user. If the database storing the authentication information is external, the authentication inquiry unit 124 makes an inquiry to the external authentication server 40 based on the user authentication information acquired by the authentication information acquisition unit 122. As illustrated in FIG. 1, when a plurality of image processing apparatuses 20 form a mesh network, even when other image processing apparatuses are not directly connected to the authentication server 40 in charge of external authentication, inquiries can be made through other image processing apparatuses 20 working as relay devices. If there is an image processing apparatus 20 that synchronizes a part or all of the authentication information included in the authentication server 40, the user communicates with the synchronized image processing apparatus 20 through the mesh network 12 and performs authentication.

The login control unit 130 includes a usage start reception unit 132, a usage start processing unit 134, a usage termination detection unit 136, and a usage termination processing unit 138.

The usage start reception unit 132 receives a login request using the mobile information terminal 30. Here, the login is an operation for starting the use of the image processing apparatus 20. Further, the login request is based on the establishment of communication such as the first communication method having a relatively narrow communication range by the first communication unit 140 described above in the specific embodiment.

In the embodiment in which the first communication method is NFC, the user requests a login by placing the mobile information terminal 30 on the mounting table 22 and aligning a communication part of the NFC and a communication part of the mounting table 22. In the embodiment in which the first communication method is Bluetooth, the user requests login by carrying the mobile information terminal 30 and entering the given range 24 centered on the image processing apparatus 20. Alternatively, the mobile information terminal 30 may be placed on or brought close to the mounting table 22, and a direct login request from the user may be accepted on the login screen displayed on the control panel 940. Alternatively, the login request may be accepted from the connected mobile information terminal 30 in response to an explicit login instruction accepted by the application or a login instruction detected by a gesture or the like by a motion sensor provided. The usage start reception unit 132 is a reception unit in this embodiment.

The usage start processing unit 134, in response to the request for login using the mobile information terminal 30, cooperates with the above-described authentication control unit 120 to perform the login process. In the login process, the legitimacy of the user of the mobile information terminal 30 is verified, and if the user is a legitimate user, the function of the image processing apparatus 20 is available to the user based on the authority given to the user. In the present embodiment, while the mobile information terminal 30 is placed on the mounting table 22, or while the mobile information terminal 30 is present within a given range 24 centered on the image processing apparatus 20, the function of the image processing apparatus 20 is available to the user.

In the present embodiment, as a part of the login process, the usage start processing unit 134 causes the first communication unit 140 to prepare for the communication by the second communication method based on the communication by the first communication method with the mobile information terminal 30 relating to the login request. The first communication unit 140 is a communication unit that performs advance preparation in the present embodiment.

In the advance preparation, the advance preparation information (such as SSID and password, also referred to as handover information) for establishing the communication is exchanged. The transmission unit 144 transmits to the communication partner the advance preparation information for connecting to the transmission unit 144. Alternatively, the reception unit 146 receives from the communication partner, the advance preparation information for the image processing apparatus 20 to connect to the communication partner. Note that the establishment of the communication by the second communication method by the communication establishment unit 152 of the second communication unit 150 is preferred to be delayed as much as possible, to reduce the occupation of the communication by the second communication method and the consumption of the number of connections of the second communication method, and from the viewpoint of reducing the influence on the logout process of another user who has logged in before the login.

The usage termination detection unit 136 detects the logout trigger. The logout refers to an operation of terminating the use of the image processing apparatus 20 in the above description. The logout trigger is based on communication by the first communication unit 140 such as the first communication method having a relatively narrow communication range in the present embodiment. For example, the signal strength of communication satisfies a predetermined criterion (for example, the radio wave strength falls below a level in which communication cannot be maintained or the communication is disconnected) can be used as the logout trigger. Alternatively, the request for logout may be received from the connected mobile information terminal 30 in response to an explicit logout instruction received on the application or a logout instruction detected as a gesture by the motion sensor. When the communication by the second communication method is already established, the logout may be triggered when the signal strength of the communication by the second communication method satisfies the predetermined criterion. Further, as described above, the logout button may be displayed on the screen of the control panel 940 to accept a direct logout request from the user.

The usage termination processing unit 138 starts the logout process in response to the logout trigger. In the logout process, the function of the image processing apparatus 20 that has been made available based on the authority given to the user is made unavailable. Alternatively, in the embodiment in which the guest user is provided with the function with the restricted authority, the function of the image processing apparatus 20 with the use authority of the guest user may be available. In addition, in the logout process according to the present embodiment, communication is generated with the mobile information terminal 30 during the process, and the usage termination processing unit 138 completes the logout process based on this communication.

Communication with the mobile information terminal 30 in the logout process is not particularly limited, but notification of success of logout, notification of failure of logout, notification of failure reason when logout fails, transmission of image data, transmission of operation history data of the image processing apparatus 20 by the user, transmission of job execution history data of the image processing apparatus 20 regarding the user, and the like can be mentioned. The operation history data is mentioned here, but such information is information unique to the user of the mobile information terminal 30 and may be managed individually and may not be left in the image processing apparatus 20. Therefore, there is a need to send such data to the mobile information terminal 30 when logging out. The usage termination processing unit 138 is a termination processing unit in the present embodiment.

As described above, the logged-out user goes away from the image processing apparatus 20 carrying the mobile information terminal 30. As a result, the communication of the established first communication method may be disconnected during the logout process. The communication establishment unit 152 of the second communication unit 150 responds to the logout trigger and establishes the communication by the second communication method when the signal strength of communication satisfies the predetermined criterion (for example, the radio wave strength falls below the level in which communication cannot be maintained or the communication is disconnected) and continues the data communication during the logout process by performing the handover before starting the logout process, at the timing of starting the logout process, or after starting the logout process. Note that the establishment of communication by the second communication method is typically started from the mobile information terminal 30, but the establishment of communication by the second communication method may be started from the image processing apparatus 20. Further, the user can explicitly give an instruction to switch to the communication by the second communication method when the user wants to transfer the image data or the like from the image processing apparatus 20 to the mobile information terminal 30 during login. In the case of the explicit switching, the communication by the second communication method has already been established before the start of logout, and the communication is not necessary to be newly established unless the connection is explicitly released.

The configuration of the mobile information terminal 30 is described with reference to FIG. 5. The functional block 200 of the mobile information terminal 30 includes a plurality of elements, is carried by the user, and is used to use various functions of the image processing apparatus 20. As illustrated in FIG. 5, the functional block 200 of the mobile information terminal 30 includes an operation unit 210, a login authentication processing unit 220, a first communication unit 230, and a second communication unit 240. Hereinafter, the main configuration related to the login and logout processes of the functional block 200 of the mobile information terminal 30 is described in detail. Note that each unit illustrated in FIG. 5 may be implemented as a software component included in an application installed in the mobile information terminal 30 or an operating system, for example.

The operation unit 210 receives various instructions from the user. In the present embodiment, the operation unit 210 receives a data communication instruction such as image data from the user after logging in. Various instructions from the user are not particularly limited, but explicit instructions for login and logout made on the application screen, input of password and account, setting to instruct whether to notify success or failure of the logout can be mentioned. The operation unit 210 displays the success of logout, the failure of logout, the reason for logout, and the like.

The login authentication processing unit 220 executes the login process and the logout process of the image processing apparatus 20 using the mobile information terminal 30. The first communication unit 230 and the second communication unit 240 control the communication by the first communication method and the communication by the second communication method respectively, corresponding to the configuration of the image processing apparatus 20. The first communication method is the near field wireless communication standard such as NFC, the short-range wireless communication standard such as Bluetooth, or the like. The second communication method is the short-range wireless communication standard such as Bluetooth, the wireless communication standard such as wireless LAN, or the like.

The first communication unit 230 includes a communication establishment unit 232, a transmission unit 234, and a reception unit 236. The communication establishment unit 232 establishes communication by the first communication method with the communication partner. The transmission unit 234 transmits data to the communication partner using the communication by the first communication method. The reception unit 236 receives data from the communication partner using the communication by the first communication method.

The second communication unit 240 includes a communication establishment unit 242, a transmission unit 244, and a reception unit 246. The communication establishment unit 242 establishes communication by the second communication method with the mobile information terminal 30 of the communication partner. In the present embodiment, the communication establishment unit 242 establishes the communication by the second communication method with the image processing apparatus 20 based on the information related to the advance preparation in response to a predetermined trigger. The transmission unit 244 transmits the data to the communication partner by the communication of the established second communication method. The reception unit 246 receives data from the communication partner by the established communication by the second communication method.

The login authentication processing unit 220 includes an authentication information providing unit 222, a handover information storage unit 224, and a termination trigger detection unit 226.

The authentication information providing unit 222 uses the first communication unit 230, for example, to provide the image processing apparatus 20 with user authentication information such as an ID and a password. In a specific embodiment, user authentication information is provided at the start of login. In another embodiment, the user authentication information may be provided before the actual login is requested. The authentication information providing unit 222 is a providing unit in the present embodiment.

The handover information storage unit 224 stores information related to the advance preparation. In the embodiment in which the advance preparation information for connecting to the image processing apparatus 20 is received from the image processing apparatus 20, the received advance preparation information is stored. On the other hand, when transmitting advance preparation information for connecting to the mobile information terminal 30 to the image processing apparatus 20, the advance preparation information to be transmitted is stored. The handover information storage unit 224 is a storage unit in the present embodiment. Note that preferably, the establishment of the communication by the second communication method by the communication establishment unit 242 of the second communication unit 240 is delayed as much as possible. In the present embodiment, a trigger for the communication establishment unit 242 to establish the communication with the image processing apparatus 20 by the second communication method may be the logout trigger, the signal strength of communication satisfies the predetermined criterion, the sensor data of the motion sensor 517 of the mobile information terminal 30 satisfies a predetermined condition (for example, a motion to raise the terminal), and a certain data communication instruction is received from the user after login. By delaying the establishment of the communication by the second communication method, the occupation of the communication by the second communication method and the consumption of the number of connections of the second communication method are reduced, and influence on the logout process of the user who logged in in advance can be reduced.

The termination trigger detection unit 226 detects the trigger of login or logout in response to a determination that the sensor data of the motion sensor 517 included in the mobile information terminal 30 satisfies a predetermined condition different from the predetermined trigger condition for establishing communication by the second communication method. The predetermined condition for the sensor data may be, for example, a motion of picking up the mobile information terminal 30, or a gesture such as shaking the mobile information terminal 30. When the termination trigger detection unit 226 detects the login trigger, the termination trigger detection unit 226 notifies the image processing apparatus 20 of the logout request through the communication by the first communication method or the second communication method.

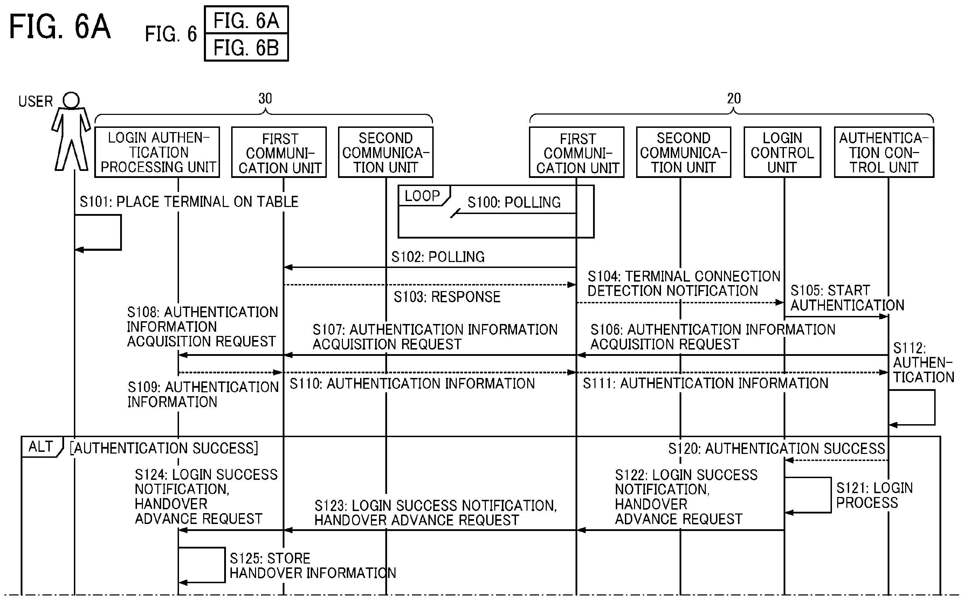

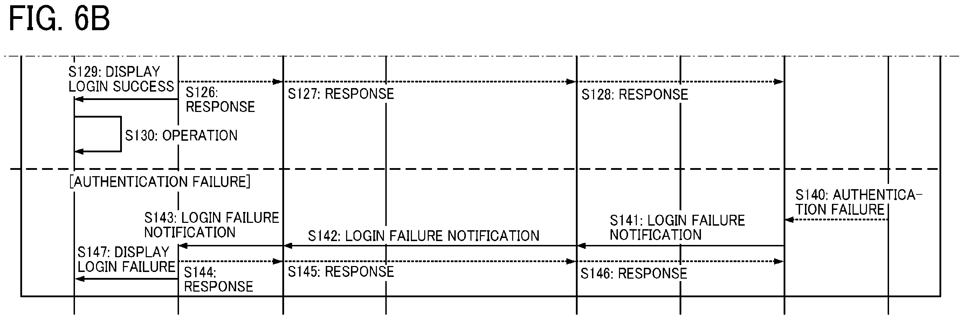

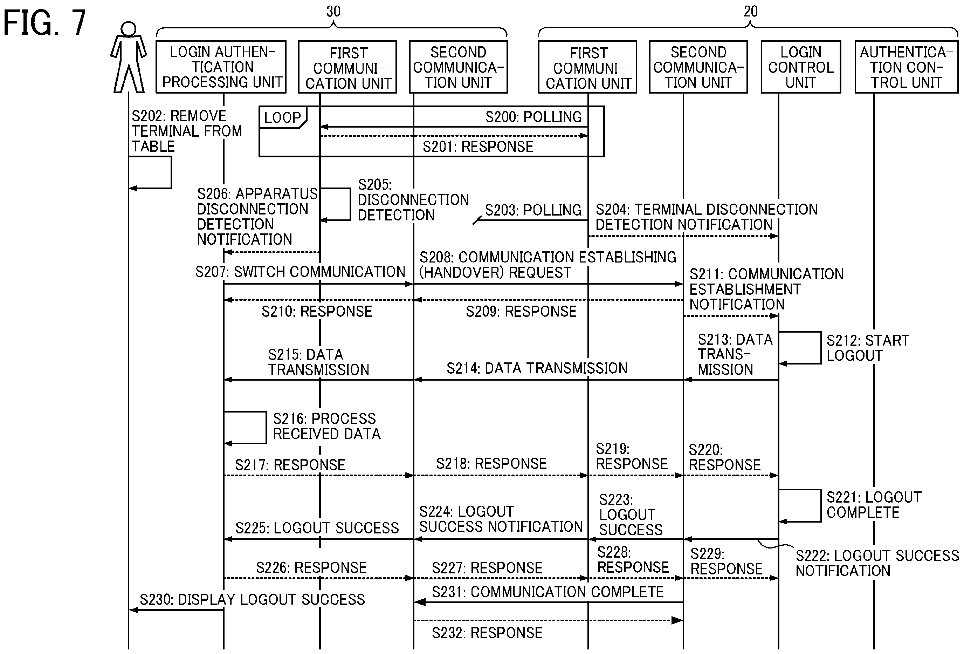

Hereinafter, the login and logout processes executed in the image processing system 10 according to the present embodiment are described with reference to FIGs. 6A, 6B, and 7.

FIG. 6A and FIG. 6B are sequence diagrams illustrating a login process executed by the image processing system according to the present embodiment. In step S100, the first communication unit 140 of the image processing apparatus 20 periodically polls and confirms whether or not the mobile information terminal 30 exists within the communication range. In step S100, the image processing apparatus 20 determines that there is no response and the mobile information terminal 30 does not exist. At this time, the image processing apparatus 20 is in the logout state.

In step S101, the user places the mobile information terminal 30 on the mounting table 22. In step S102, the first communication unit 140 of the image processing apparatus 20 performs polling, and in step S103, the first communication unit 230 of the mobile information terminal 30 returns a response. As a result, the image processing apparatus 20 detects that the mobile information terminal 30 exists in the communication range. In step S104, the first communication unit 140 of the image processing apparatus 20 notifies the login control unit 130 of the terminal connection detection.

In step S105, the login control unit 130 requests the authentication control unit 120 to start authentication. In steps S106 to S108, the authentication control unit 120 requests the login authentication processing unit 220 of the mobile information terminal 30 through the first communication unit 140 of the image processing apparatus 20 and the first communication unit 230 of the mobile information terminal 30 to acquire the user authentication information. In steps S109 to S111, the login authentication processing unit 220 returns the user authentication information to the authentication control unit 120 of the image processing apparatus 20 through the first communication unit 230 and the first communication unit 140. Here, the user authentication information may be information of the user stored in the mobile information terminal 30, or the mobile information terminal 30 may prompt the user to input the authentication information. Further, when returning the authentication information stored in the mobile information terminal 30, the mobile information terminal 30 may be unlocked by using biometric authentication provided in the mobile information terminal 30. In step S112, the authentication control unit 120 authenticates the user based on the acquired authentication information.

In step S120, when the authentication is successful, the authentication control unit 120 notifies the login control unit 130 of the successful authentication and the authority of the user. In step S121, the login control unit 130 executes the login process based on the obtained authority of the user.

In steps S122 to S124, the login control unit 130 sends a login success notification to the login authentication processing unit 220 through the first communication unit 140 of the image processing apparatus 20 and the first communication unit 230 of the mobile information terminal 30. At the same time, a handover advance request is made. The handover advance request includes advance preparation information for establishing communication by the second communication method. In step S125, the login authentication processing unit 220 stores the received advance preparation information in the handover information storage unit 224. Here, the communication method may be selected or authenticated in advance so that the handover can be instantaneously performed when a large amount of data is exchanged between the image processing apparatus 20 and the mobile information terminal 30. The mobile information terminal 30 may perform processing for the handover advance request. If necessary, the mobile information terminal 30 may display on the operation unit to cause the user to select whether or not to permit the handover and which communication method to use. Selection by the user may be omitted by storing particular items as settings in the mobile information terminal 30.

In steps S126 to S128, the login authentication processing unit 220 returns a response to the login control unit 130 through the first communication unit 230 of the mobile information terminal 30 and the first communication unit 140 of the image processing apparatus 20. In step S129, the login control unit 130 displays successful login on an application screen or on a notification indicator, for example. In step S130, the user starts operation of the image processing apparatus 20. After the login to the image processing apparatus 20 is completed, the user performs operations such as copying, scanning, and printing on the image processing apparatus 20. Even while the image processing apparatus 20 is being operated, the mobile information terminal 30 placed on the mounting table 22 of the image processing apparatus 20 can be operated.

When the authentication in step S112 fails, the authentication control unit 120 notifies the login control unit 130 of the authentication failure in step S140. In steps S141 to S143, the login control unit 130 transmits a login failure notification to the login authentication processing unit 220 of the mobile information terminal 30 through the first communication unit 140 of the image processing apparatus 20 and the first communication unit 230 of the mobile information terminal 30. In steps S144 to S146, the login authentication processing unit 220 returns a response to the login control unit 130 of the image processing apparatus 20 through the first communication unit 230 of the mobile information terminal 30 and the first communication unit 140 of the image processing apparatus 20. In step S147, the login authentication processing unit 220 displays an icon or a message indicating that the login has failed on the application screen or the notification indicator, for example. In this case, the user cannot operate the image processing apparatus 20 or can operate with the authority of the guest user.

FIG. 7 is a sequence diagram illustrating the logout process. In step S200, the first communication unit 140 of the image processing apparatus 20 performs polling and confirms whether the mobile information terminal 30 exists within the communication range. In step S201, the first communication unit 230 of the mobile information terminal 30 returns a response to the polling, and the image processing apparatus 20 determines that the mobile information terminal 30 is still in the communication range. The image processing apparatus 20 is desired to be connected to the mobile information terminal 30 by communication by the first communication method until logout. For this reason, the mobile information terminal 30 is desired to be placed at a place such as the mounting table 22. The image processing apparatus 20 is in the login state while there is a response to the polling.

Here, it is assumed that the user removed the mobile information terminal 30 from the mounting table 22 in step S202. In step S203, the first communication unit 140 of the image processing apparatus 20 performs polling and detects that the mobile information terminal 30 does not exist in the communication range because there is no response. In step S204, the first communication unit 140 of the image processing apparatus 20 notifies the login control unit 130 of a terminal disconnection detection. On the other hand, in step S205, the first communication unit 230 of the mobile information terminal 30 detects that communication is no longer possible (disconnected) and in step S206, the login authentication processing unit 220 of the mobile information terminal 30 is notified of the disconnection of the communication with the image processing apparatus 20.

In step S207, the login authentication processing unit 220 instructs the second communication unit 240 of the mobile information terminal 30 to switch communication. In step S208, the second communication unit 240 of the mobile information terminal 30 makes a communication establishment (handover) request to the second communication unit 150 of the image processing apparatus 20. In step S209, the second communication unit 150 of the image processing apparatus 20 sends a response to the communication establishment (handover) request to the second communication unit 240 of the mobile information terminal 30. The image processing apparatus 20 establishes the handover by checking with the handover information held by the image processing apparatus 20. In step S210, the second communication unit 150 of the image processing apparatus 20 responds to the login authentication processing unit 220 that the communication switching is completed. In step S211, the second communication unit 150 of the image processing apparatus 20 notifies the login control unit 130 that communication by the second communication method is established. In the present embodiment, the handover is described as being started from the mobile information terminal 30. However, the present disclosure is not limited to the above description, and the handover may be requested from the image processing apparatus 20 that has detected the terminal disconnection.

In response to the terminal disconnection detection notification of step S204 or the communication establishment notification of step S211, the login control unit 130 starts the logout process in step S212. In the logout process from the image processing apparatus 20, transferring to an external system of information such as usage of the image processing apparatus 20 by the user and the tendency of the function used, and transferring the data from the main storage device of the image processing apparatus 20 to an auxiliary storage device such as an HDD are executed.

In steps S213 to S215, the login control unit 130 transmits data to the login authentication processing unit 220 through the second communication unit 150 of the image processing apparatus 20 and the second communication unit 240 of the mobile information terminal 30. If the logout process is not sufficiently performed, the data transfer may be performed through the communication by the switched second communication method. Examples of cases in which the logout process is not completed sufficiently include cases in which data transfer to the external system is not completed, connection with the external system fails, and the auxiliary storage device has insufficient capacity. The data handled in the logout process varies depending on the function of the image processing apparatus 20. However, information directly associated with an individual such as an operation performed by the user, is preferred to be transferred to the user's mobile information terminal 30.

In step S216, the login control unit 130 executes processing on the received data. At this time, if necessary, the user may be notified that the logout process has failed, and a method of processing may be selected. As the processing performed by the mobile information terminal 30, data may be retained in the mobile information terminal 30 until the next time the user logs in to the image processing apparatus 20, or data may be transferred to the external system instead of the image processing apparatus 20.

In steps S217 to S220, the login authentication processing unit 220 sends a response to the data transmission to the login control unit 130 through the second communication unit 240 of the mobile information terminal 30 and the second communication unit 150 of the image processing apparatus 20. By handing over to the communication by the second communication method, important information during the logout process is transferred as long as the communication continues even after the user leaves.

In addition, in the present embodiment, it is assumed that data transmission is performed through the communication by the second communication method, but when the logout process is sufficiently completed while being connected by the first communication method, the data transmission through the communication by the second communication method may be omitted.

In step S221, the login control unit 130 completes logout. In steps S222 to S225, the login control unit 130 sends a logout success notification to the login authentication processing unit 220 through the second communication unit 150 of the image processing apparatus 20 and the second communication unit 240 of the mobile information terminal 30. In steps S226 to S229, the login authentication processing unit 220 makes a response to the login control unit 130 through the second communication unit 240 of the mobile information terminal 30 and the second communication unit 150 of the image processing apparatus 20. In step S230, the login control unit 130 displays the success of logout on the application screen or the notification indicator, for example. In this case, the user cannot operate the image processing apparatus 20 or can operate with the authority of the guest user.

On the other hand, when the logout is not completed, the login control unit 130 notifies the login authentication processing unit 220 of the logout failure in steps S222 to S225. In step S230, the login control unit 130 displays the logout failure on the application screen or the notification indicator, for example. In this case, the user is required to go to the image processing apparatus 20 again and perform a logout operation. If the logout is successful, the notification may be omitted.

In step S231, the second communication unit 150 of the image processing apparatus 20 notifies the second communication unit 240 of the mobile information terminal 30 that communication is terminated, and the second communication unit 240 of the mobile information terminal 30 responds in step S232.

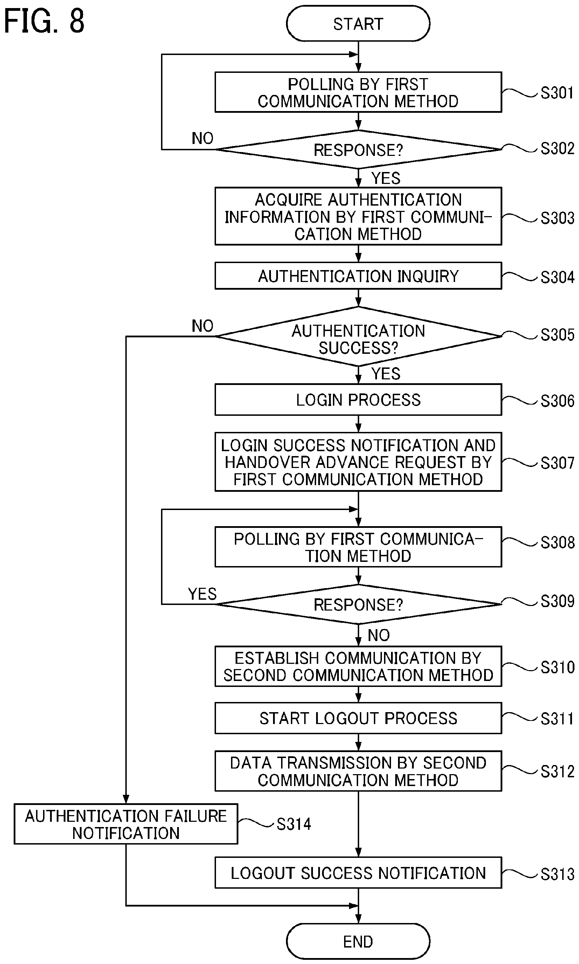

The login process executed by the image processing system 10 according to the present embodiment is described below with reference to FIG. 8. FIG. 8 is a flowchart illustrating the login process executed by the image processing apparatus 20 according to the present embodiment. The process illustrated in FIG. 8 starts from, for example, in response to the activation of the image processing apparatus 20.

In step S301, the image processing apparatus 20 executes polling by the first communication unit 140 using the first communication method. In step S302, the image processing apparatus 20 determines whether there is a response to the polling. If the image processing apparatus 20 determines in step S302 that there is no response to polling (NO in step S302), the process is returned to step S301. On the other hand, if the image processing apparatus 20 determines in step S302 that there is a response to the polling (YES in step S302), the login request using the mobile information terminal 30 is accepted, and the process proceeds to step S303.

In step S303, the image processing apparatus 20 acquires the user authentication information from the mobile information terminal 30 through the communication by the first communication method by the first communication unit 140. In step S304, the image processing apparatus 20 inquires, for example, the external authentication server 40 based on the acquired user authentication information. In step S305, the image processing apparatus 20 determines whether the authentication is successful as a result of the authentication inquiry. If the image processing apparatus 20 determines in step S305 that the authentication is successful, the process proceeds to step S306. In step S306, the image processing apparatus 20 performs a login process to enable the user to use the functions of the image processing apparatus 20 within the range of the given authority. In step S307, the image processing apparatus 20 makes a login success notification and a handover advance request through the communication by the first communication method.

After successful login in step S308, the first communication unit 140 of the image processing apparatus 20 executes polling through communication by the first communication method. In step S309, the image processing apparatus 20 determines whether there is a response to the polling. If the image processing apparatus 20 determines in step S309 that there is a response to the polling (YES in step S309), the process is returned to step S308 since the user is still logged in. On the other hand, if the image processing apparatus 20 determines in step S309 that there is no response to the polling (NO in step S309), the process proceeds to step S310. In step S310, the image processing apparatus 20 establishes communication by the second communication method by the second communication unit 150 based on the advance preparation information related to the handover advance request.

In step S311, the image processing apparatus 20 starts the logout process. In step S312, the image processing apparatus 20 causes the second communication unit 150 to perform data transmission by the communication by the second communication method. In step S313, the image processing apparatus 20 notifies the logout success by the communication by the second communication method and ends the process. Then, the process starts again.

On the other hand, if the image processing apparatus 20 determines in step S305 that the authentication failed (NO in step S305), the process proceeds to step S314. In step S314, the image processing apparatus 20 notifies the authentication failure, and ends the process. Then, the process starts again.

As described above, the network environment in the image processing system 10 according to the present embodiment, the functional blocks 100 and 200 implemented on the image processing apparatus 20 and the mobile information terminal 30, and the login process and the logout process are described with reference to FIG. 1 and FIGs. 4 to 8. In FIGs.4 and 5, functions according to another embodiment included in the functional block 100 implemented in the image processing apparatus 20 and the functional block 200 implemented in the mobile information terminal 30 are also illustrated by dotted lines. With reference to FIGs. 1, 4, 5, and 9, other embodiments of the present disclosure are described below.

A configuration of the image processing apparatus 20 in another embodiment is described with reference to FIG. 4. The functional block 100 of the image processing apparatus 20 according to another embodiment illustrated in FIG. 4 further includes a third communication unit 160.

The above-described first communication unit 140 is a communication unit for exchanging the advance preparation information. The above-described second communication unit 150 is a handover destination communication unit that is established based on the advance preparation information. On the other hand, in the present embodiment, the third communication unit 160 is a communication unit for performing communication by the third communication method for exchanging the authentication information described above. The third communication method preferably has a wider communication range than the first communication method and a narrower communication range than the second communication method. In a specific embodiment, when the first communication method described above is near field communication (NFC) and the second communication method is wireless communication (wireless LAN), the third communication method may be short-range wireless communication Bluetooth.

The third communication unit 160 includes a communication establishment unit 162, a transmission unit 164, and a reception unit 166. The communication establishment unit 162 establishes the communication by the third communication method with the mobile information terminal 30, when the mobile information terminal 30 (user carrying the mobile information terminal) enters within a given range (the communication range of the third communication method) centered on the image processing apparatus 20. The transmission unit 164 transmits data to the communication partner through the communication by the established third communication method. The reception unit 166 receives data from the communication partner through the communication by the established third communication method.

A configuration of the mobile information terminal 30 in another embodiment is described with reference to FIG. 5. The functional block 200 of the mobile information terminal 30 according to another embodiment illustrated in FIG. 5 further includes a third communication unit 250.

The third communication unit 250 includes a communication establishment unit 252, a transmission unit 254, and a reception unit 256. When the mobile information terminal 30 (user carrying the mobile information terminal) enters a given range centered on the specific image processing apparatus 20, the communication establishment unit 252 establishes communication of the third communication method with the specific image processing apparatus 20. The transmission unit 254 transmits data to the communication partner through the communication by the third communication method established by the communication establishment unit 252. The reception unit 256 receives data from the communication partner through the communication by the third communication method established by the communication establishment unit 252.

In another embodiment, the plurality of image processing apparatuses 20 are divided into a plurality of groups (20a to 20c, 20d to 20f) each including one or a plurality of image processing apparatuses, as indicated by a dotted line in FIG. 1. Each group has communication areas 10a and 10b in which the communication range of the third communication method of one or a plurality of image processing apparatuses 20 belonging to each group are summed up.

Before logging in to a specific image processing apparatus 20, a user temporarily logs in to an area (for example, the area 10a including the image processing apparatuses 20a to 20c) formed by a group of specific image processing apparatuses 20 (also referred to as area login). Here, area login is referred to as an operation of starting the use of a specific image processing apparatus group. Any one of the specific image processing apparatus groups acquires authentication information in advance at the time of temporary login, and the authentication information acquired in advance is shared in the specific image processing apparatus group. Alternatively, the legitimacy of the user is verified based on the acquired authentication information, and the authentication result is shared within the specific image processing apparatus group. After temporarily logging in to the specific image processing apparatus group, the user places the mobile information terminal 30 on the mounting table 22 of the specific image processing apparatus 20 in the group, logs in to the specific image processing apparatus 20, and starts using the specific image processing apparatus 20.

Further, the user can log out from the specific image processing apparatus 20 by removing the mobile information terminal 30 from the mounting table 22 of the specific image processing apparatus 20. Furthermore, the user can cancel the temporary login state (also referred to as area logout) by exiting from the area (for example, 10a) including the specific image processing apparatus group. The user information (authentication information or authentication result) shared in the specific image processing apparatus group is discarded along with the area logout.

In the above description, the area login operation and the specific image processing apparatus 20 login operation are different operations. Further, the operation of logging out from the specific image processing apparatus 20 and the operation of logging out of the area are different operations. Furthermore, area login and area logout are triggered by the entry and exit operations to the area, and login and logout to a specific apparatus are triggered by the operation of placing and removing the mobile information terminal 30 on and from the mounting table. However, the present disclosure is not limited to the above description.

In a specific embodiment, the user logs in to the specific image processing apparatus 20 by temporary logging in upon entering the area and placing the mobile information terminal 30 on the mounting table in the same manner as described above. On the other hand, when the user removes the mobile information terminal 30 from the mounting table 22, the specific image processing apparatus 20 is not logged out, and the image processing apparatus 20 is temporary locked until the mobile information terminal 30 is placed on the mounting table 22 again. When the mobile information terminal 30 exits the area (for example, 10a illustrated in FIG. 1), the area logout and the logout from the specific image processing apparatus are simultaneously performed.

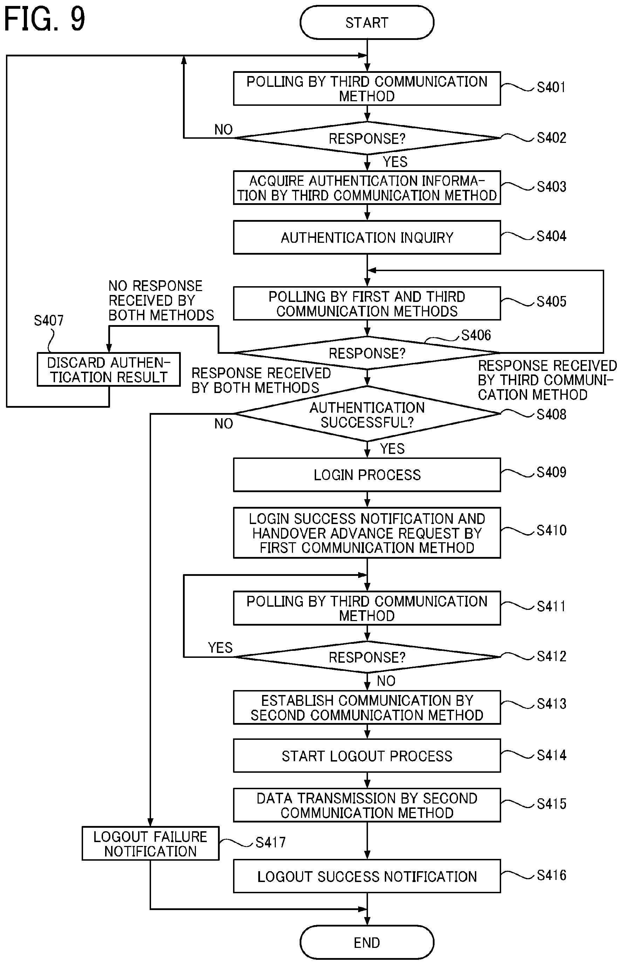

A login process executed in an image processing system according to another embodiment is described below with reference to FIG. 9. FIG. 9 is a flowchart illustrating login process executed by the image processing apparatus 20 according to another embodiment. The process illustrated in FIG. 9 is started in response to activation of the image processing apparatus 20, for example. The login process illustrated in FIG. 9 corresponds to the case where the area logout and the logout of the specific image processing apparatus are performed in response to the mobile information terminal 30 leaving the area.

In step S401, the image processing apparatus 20 performs polling using the third communication method. In step S402, the image processing apparatus 20 determines whether there is a response to the polling. If the image processing apparatus 20 determines in step S402 that there is no response to the polling (NO in step S402), the control process is returned to step S401. On the other hand, if image processing apparatus 20 determines in step S402 that there is a response to the polling (YES in step S402), it is determined that the area login request using the mobile information terminal 30 is accepted, and the process proceeds to step S403.

In step S403, the image processing apparatus 20 acquires the user authentication information from the mobile information terminal 30 through the communication by the third communication method performed by the third communication unit 160. In step S404, the image processing apparatus 20 inquires, for example, the external authentication server 40 based on the acquired user authentication information and acquires the authentication result. The authentication result is shared within a specific image processing apparatus group.

In step S405, the image processing apparatus 20 performs polling using the first communication method and the third communication method. In step S406, the image processing apparatus 20 determines whether there is a response to the polling. If the image processing apparatus 20 determines in step S406 that there is a response to the polling of the third communication method only, the process is returned to step S405. In this case, the mobile information terminal 30 is continuously present in the communication area, but the specific image processing apparatus 20 is not requested to log in. On the other hand, if the image processing apparatus 20 determines in step S406 that there is no response to both the polling of the first communication method and the polling of the third communication method, the process proceeds to step S407 to discard the authentication result, and then return the process to step S401. In this case, the mobile information terminal 30 left the communication area, and the area login is canceled. On the other hand, if the image processing apparatus 20 determines in step S406 that there are responses to both the polling of the first communication method and the polling of the third communication method, the control proceeds to step S408.

In step S408, the image processing apparatus 20 determines whether the authentication result obtained in step S404 indicates success. When it is determined in step S408 that the authentication has been successful, the control proceeds to step S409. In step S409, the image processing apparatus 20 performs a login process to make the functions of the image processing apparatus 20 available to the user within the range of the given authority. In step S410, the image processing apparatus 20 makes a login success notification and a handover advance request based on the communication by the first communication method.

After the successful login, in step S411, the image processing apparatus 20 performs polling by the third communication method. In step S412, the image processing apparatus 20 determines whether there is a response to the polling. If the image processing apparatus 20 determines in step S412 that there is still a response to the polling of the third communication method (YES in step S412), the control is returned to step S411, and the login state to the image processing apparatus 20 is maintained. On the other hand, if the image processing apparatus 20 determines in step S412 that there is no more response to the polling of the third communication method (NO in step S412), the control process proceeds to step S413. In step S413, the image processing apparatus 20 establishes communication by the second communication method by the second communication unit 150 based on the advance preparation information related to the handover advance request.

In step S414, the image processing apparatus 20 starts the logout process. In step S415, the image processing apparatus 20 causes the second communication unit 150 to perform data transmission by the communication by the second communication method. In step S416, the image processing apparatus 20 notifies the success of logout by the communication by the second communication method and ends the process. Here, the area login is canceled together with the logout from the specific image processing apparatus 20. Then, the process starts again.

On the other hand, if the image processing apparatus 20 determines in step S408 that the authentication failed (NO in step S408), the process proceeds to step S417. In step S417, the image processing apparatus 20 notifies the authentication failure, and ends the process. Then, the process starts again.

In the above description, after the successful login, the polling is performed only in the third communication method in step S411. The login state is maintained while the communication by the third communication method is connected regardless of whether the communication by the first communication method is continued. However, the present disclosure is not limited to the above description, and in another embodiment, polling is performed even in the first communication method, and when there is no response, the use of the image processing apparatus 20 may be locked, and when a response is received the use of the image processing apparatus 20 may be unlocked. Further, in the above description, determination is made based on whether or not there is a response to polling, but the determination may be made based on whether or not the radio field intensity is equal to or higher than a certain threshold value.

Further, the login process illustrated in FIG. 9 is described as an area login using the mobile information terminal 30 performed by the image processing apparatus 20 that is the login target. However, as described above, the area login may be performed by any of the specific image processing apparatus groups. Therefore, the processing of steps S401 to S404 may be performed by another image processing apparatus. In such a case, in step S405, polling to confirm the connection state with the mobile information terminal 30 by the communication of the third communication method to the other image processing apparatus in the same group and the polling by the first communication method may be performed, and in step S411, polling to confirm the connection state with the mobile information terminal 30 by the communication of the third communication method to the other image processing apparatuses in the same group may be performed.

The embodiments using the three communication methods have been described above with reference to FIGs. 1, 4, 5, and 9. In the above-described embodiment, the first communication method for exchanging the advance preparation information is the near field communication (NFC), the second communication method at the handover destination is wireless communication (wireless LAN), and the third communication method for exchanging the authentication information is short-distance wireless communication (Bluetooth). The login is detected based on the communication by the first communication method, and the logout is detected based on the communication by the third communication method. However, even when the three communication methods are used, the present disclosure is not limited to the above-described embodiment.

In yet another specific embodiment, the first communication method for exchanging advance preparation information is short-distance wireless communication (Bluetooth), the second communication method of the handover destination is wireless communication (wireless LAN), the third communication method for exchanging the authentication information may be near field communication (NFC). Then, login and logout may be detected based on the communication of the third communication method. Alternatively, the login may be detected based on the communication by the third communication method and the logout may be detected based on the communication by the first communication method.

As described above, according to the above-described embodiments, an image processing apparatus, an image processing system, a method, and a program capable of safely completing the usage termination process without impairing the convenience of the user are provided.

In the above-described embodiment, the communication connection between the image processing apparatus and the mobile information terminal can be switched at the time of logout. Therefore, even if the communication by the first communication method is already disconnected at the time of logout or during the logout process, the communication by the second communication method takes over and the communication with the mobile information terminal 30 is continued to complete the logout process. Therefore, the logout process is safely completed without impairing the convenience of the user.

In the above described embodiments, the image processing apparatus 20 is used as an example of the information processing apparatus. However, the information processing apparatus is not limited to the image processing apparatus 20 as long as the information processing apparatus is an apparatus that accepts login and logout and provides a user with a certain function. The information processing apparatus includes, for example, an output device such as a projector (PJ), an interactive white board (a white board having an electronic whiteboard function capable of mutual communication (IWB)), a digital signage, a head up display (HUD) device, and an industrial machine, an imaging device, a sound collecting device, a medical device, a network home appliance, an automobile (connected car), a notebook PC, a mobile phone, a smartphone, a tablet terminal, a game console, a personal digital assistant (PDA), a digital camera, a wearable PC or a desktop PC.

Each of the functions of the described embodiments may be implemented by one or more processing circuits or circuitry. Processing circuit includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

The functional blocks as described above are implemented by a computer-executable program written by programming languages such as an assembler language, C, and object-oriented programming languages such as C++, C#, and Java (registered trademark). The program may be distributed through a telecommunication line or as being stored in a computer-readable storage medium such as a ROM, an electrically erasable and programmable read only memory (EEPROM), an electrically programmable read only memory (EPROM), a flash memory, a flexible disk, a compact disc read only memory (CD-ROM), a compact disc rewritable (CD-RW), a digital versatile disk (DVD)-ROM, a DVD-RAM, a DVD-RW, a Blu-ray disc, a secure digital (SD) card, and a magneto-optical (MO) disc.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure. Any one of the above-described operations may be performed in various other ways, for example, in an order different from the one described above.

The present disclosure can be implemented in any convenient form, for example using dedicated hardware, or a mixture of dedicated hardware and software. The present disclosure may be implemented as computer software implemented by one or more networked processing apparatuses. The processing apparatuses can include any suitably programmed apparatuses such as a general purpose computer, personal digital assistant, mobile telephone (such as a Wireless Application Protocol (WAP) or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the internet. The carrier medium can also include a storage medium for storing processor readable code such as a floppy disk, hard disk, compact disc read only memory (CD ROM), magnetic tape device or solid state memory device.

## Claims

1. An information processing apparatus (20) comprising:
a reception unit (132) for receiving a usage start request from an information terminal (30);
a communication unit (140) for communicating by a first communication method with the information terminal (30) that sends the usage start request to prepare communication by a second communication method in advance, the second communication method having a wider communication range than the first communication method;
a communication establishment unit (152) for establishing communication by the second communication method with the information terminal (30); and
termination processing unit (138) for completing a usage termination process based on the communication by the second communication method with the information terminal (30) in response to a trigger of usage termination.

2. The information processing apparatus (20) of claim 1, wherein
the communication by the second communication method is established based on information related to the advance preparation of communication, in response to one of the trigger of usage termination, signal strength of communication during the usage termination process satisfying a predetermined criterion, receiving of a specific data communication instruction from a user after the usage start, and sensor data of a motion sensor (517) included in the information terminal (30) satisfying a predetermined condition, based on advance preparation information.

3. The information processing apparatus (20) of claims 1 or 2, wherein
the trigger for the usage termination is at least one of the signal strength of the communication by the first communication method satisfying a predetermined criterion, the signal strength of the communication by the second communication method satisfying a predetermined criterion, the signal strength of communication of a communication method different from the first communication method and second communication method satisfying a predetermined criterion, and the sensor data of the motion sensor (517) included in the information terminal (30) satisfying a predetermined condition.

4. The information processing apparatus (20) of any one of claims 1 to 3, wherein
the usage start request is based on establishment of communication by one of the first communication method and a third communication method different from the first communication method and the second communication method, and the usage start includes one of usage of the information processing apparatus (20) and usage of a group of apparatuses including the information processing apparatus (20).

5. The information processing apparatus (20) of any one of claims 1 to 4, wherein
the first communication method is a near field wireless communication standard for establishing communication based on alignment of communication parts, and the second communication method is a wireless communication standard different from the first communication method.

6. The information processing apparatus (20) of claim 5, wherein
the first communication method is Near Field Communication (NFC), and the second communication method is one of Bluetooth and a wireless local area network (LAN).

7. The information processing apparatus (20) of any one of claims 1 to 4, wherein
the first communication method is Bluetooth, and the second communication method is the wireless LAN.

8. The information processing apparatus (20) of any one of claims 1 to 7, further comprising:
an acquisition unit (122) for acquiring user authentication information in advance from the information terminal (20) before receiving the usage start request, through communication by one of the first communication method and a third communication method different from the first communication method and the second communication method.

9. The information processing apparatus (20) of any one of claims 1 to 8, wherein
the information processing apparatus (20) forms a mesh network (12) with one or more other information processing apparatuses (20), and the information processing apparatus (20) further comprises:
an authentication inquiry unit (124) for performing user authentication by communicating through the mesh network (12) with an information processing apparatus (20) that is synchronized with an apparatus (40) in charge of authentication among the one or more other information processing apparatuses (20).

10. The information processing apparatus (20) of any one of claims 1 to 9, wherein
the information processing apparatus (20) is a multifunctional peripheral (MFP).

11. An information processing system (10) comprising the information processing apparatus (20) of any one of claims 1 to 11 and an information terminal (30), the information terminal (30) comprising:
a storage unit (224) for storing information related to the advance preparation of communication; and
a communication establishing unit (242) for establishing communication by the second communication method with the information processing apparatus (20) based on the information related to the advance preparation of communication in response to a predetermined trigger.

12. The information processing system (10) of claim 11, wherein
the predetermined trigger is one of a trigger for usage termination, a signal strength of communication during a usage termination process satisfying a predetermined criterion, a receiving of a specific data communication instruction from a user after usage start, and sensor data of a motion sensor (517) included in the information terminal (30) satisfying a predetermined condition.

13. A method of using an information processing apparatus (20) by an information terminal (30), comprising:
receiving (S103) a usage start request from the information terminal (30);
communicating (S122) by a first communication terminal with the information terminal (30) that sends the usage start request to prepare communication by a second communication method in advance, the second method having a wider communication range than the first communication method;
establishing (S211) communication by the second communication method with the information terminal (30), based on information related to the advance preparation of communication, in response to a predetermined trigger; and
completing (S221) a usage termination process based on the communication by the second communication method with the information terminal (30), in response to a usage termination trigger.

14. A carrier means carrying computer readable code for controlling a computer system to carry out the method of claim 13.
